# EUROPÄISCHE PATENTSCHRIFT

(11) **EP 1 353 110 B1**
(45) Veröffentlichungstag und Bekanntmachung des Hinweises auf die Patenterteilung: **23.01.2008**
(21) Anmeldenummer: 03008374.5
(22) Anmeldetag: 10.04.2003
(51) Int. Cl.: F16M 11/04

(54) **Positioniertisch**
Positioning table
Table de positionnement

(30) Priorität: 10.04.2002 DE 10215750; 27.06.2002 DE 10228818
(43) Veröffentlichungstag der Anmeldung: 15.10.2003
(73) Patentinhaber: Physik Instrumente (PI) GmbH & Co. KG, 76228 Karlsruhe (DE)
(72) Erfinder: Gloess, Rainer, 76337 Waldbronn (DE)
(74) Vertreter: Kruspig, Volkmar

(56) Entgegenhaltungen:
- DE-U- 29 618 149
- DE-U- 29 709 878
- US-A- 5 339 749
- US-B1- 6 186 024

## Beschreibung

Die Erfindung betrifft einen Positioniertisch für translatorische Bewegungen in drei zueinander orthogonalen Richtungen nach dem Oberbegriff des Patentanspruchs 1.

Derartige Positioniertische gehören zum Stand der Technik und werden in Abhängigkeit von jeweiligen Ausführungsgrößen und geforderten Verschiebelängen beispielsweise zur Justage im feinmechanischen und optischen Bereich verwendet. Positioniertische bestehen im wesentlichen aus einer Plattform, die von Verstelleinrichtungen, welche mit Stellantrieben verbunden sind, verschoben wird. Dabei lassen sich zwei grundlegende Varianten unterscheiden.

Bei einer ersten bekannten Ausführungsform ruht die Plattform auf einer Anordnung von stabförmigen Koppelelementen, die ihrerseits von Stellmotoren bewegt werden, sodass die Plattform gehoben, gesenkt oder gekippt werden kann. Um eine Plattform im Raum zu halten und zu positionieren, wird im allgemeinen eine Anordnung von sechs Koppelelementen bevorzugt. Eine derartige Positioniervorrichtung stellt eine Parallelkinematik dar und ist z.B. in der DE 296 18 149 U1 gezeigt. Die verstellbaren Koppelelemente übertragen hierbei Bewegungen von Antrieben, die vorteilhaft in einer Ebene angeordnet sind, an den Fußpunkten der Koppelelemente angreifen und die Plattform über diese verstellen können. Derartige Vorrichtungen erlauben eine große Variabilität der Plattformbewegungen, sind jedoch in ihrer mechanischen Konstruktion sowie in der Ansteuerung der Antriebe sehr aufwendig. Für einfache translatorische Bewegungen in zueinander orthogonalen Richtungen, beispielsweise entlang von x,y,z-Koordinatenachsen ist dieses System sehr kompliziert gestaltet. Zudem nimmt ein solcher Aufbau aus Stellelementen und Kabelzuführungen einen verhältnismäßig großen Raum ein und ist für kompakte Ausführungen von Positioniertischen nicht geeignet.

Alternativ dazu sind für rein translatorische Bewegungen Sandwichaufbauten linearer Stellelemente bekannt. Hierbei werden Verschiebungen der Plattform in Richtung einer Achse durch lineare Antriebe bewerkstelligt, wobei Bewegungen in einer Ebene dadurch erreicht werden können, indem mehrere solcher linearen Antriebe übereinander gestapelt werden. Ein Beispiel für eine derartige Anordnung ist in der DE 297 09 878 U1 offenbart. In dieser Gebrauchsmusterschrift wird ein Beispiel für einen xy-Tisch angegeben, bei dem jeweils lineare Antriebe für eine x und eine y-Richtung übereinander angeordnet sind, wobei eine Erweiterung zu einer Positioniereinrichtung in drei Raumdimensionen durch einen senkrecht zur x- bzw. y-Richtung angeordneten linearen Antrieb denkbar ist.

Derartige stapelförmige Anordnungen weisen jedoch nicht unerhebliche Nachteile auf. So besitzen die Verschiebungsrichtungen unterschiedliche dynamische Eigenschaften, da mindestens ein Antrieb für eine Verschiebungsrichtung stets mitbewegt werden muss, wenn ein anderer Antrieb aktiv ist. Eine Erweiterung einer solchen Stapelanordnung zu einer dreidimensionalen Positioniereinrichtung ist aus diesem Grunde sehr problematisch, da die gesamten Antriebe für die x-, bzw. y-Achse mit bewegt werden müssen, wenn eine Verschiebung in Richtung der z-Achse erfolgt. Zumindest die Bewegung der Positioniereinrichtung in z-Richtung unterliegt dann durch die wirkende Schwerkraft einem beträchtlich größeren Bewegungswiderstand. Diese unterschiedliche Dynamik muss bei der Ansteuerung der Positioniereinrichtung berücksichtigt werden. Zudem ist der Aufbau einer derartigen Positioniereinrichtung zumindest in seiner Höhe relativ raumgreifend und kann nicht kompakt und flach gestaltet werden.

Es ist daher Aufgabe der Erfindung, einen weiterentwickelten Positioniertisch für translatorische Bewegungen in drei orthogonalen Richtungen anzugeben, der einfach aufgebaut sowie kompakt und platzsparend ausgeführt ist und der präzise Bewegungen bei im wesentlichen gleicher Dynamik in allen drei orthogonalen Verschiebungsrichtungen erlaubt.

Die Aufgabe wird mit einem Positioniertisch nach Anspruch 1 gelöst, wobei die Unteransprüche zweckmäßige Ausgestaltungen und Weiterbildungen darstellen.

Die Antriebsteile des Positioniertisches werden erfindungsgemäß als Bestandteile eines einheitlich ausgeführten Grundkörpers geführt. Dieser läßt Bewegungsrichtungen zu, die sämtlich in einer ersten und/oder einer zweiten, dazu parallelen Ebene liegen. Mittels Gelenkteilen werden die Formänderungen des Grundkörpers in translatorische Bewegungen einer Plattform entlang dreier zueinander orthogonaler Achsen überführt.

Der Grundkörper ist als ein massiver Körper ausgeführt. Durch dieses Merkmal ist der Antrieb des Positioniertisches in sehr einfacher Weise gestaltet, was insbesondere eine sehr kompakte und platzsparende Gestaltung der gesamten Anordnung ermöglicht. Der Grundkörper ist mit Ausgestaltungen versehen, die zum einen voneinander unabhängige Verschiebungen seiner Außenkonturen erlauben und zum anderen Gelenkteile aufnehmen, die die variable Form des Grundkörpers auf die Plattform des Positioniertisches übertragen. Weil die Ausdehnungen des Grundkörpers innerhalb einer Ebene in gleicher Weise erfolgen, unterliegen diese einer gleichen Dynamik. Dadurch können Verschiebungen der Plattform in allen drei orthogonalen Achsen mit gleicher Präzision und gleicher Positionsstabilität erfolgen.

Der Grundkörper ist in Form einer Platte ausgeführt, die Ausnehmungen aufweisen kann, die so gestaltet sind, dass die durch diese abgegrenzten Teilbereiche der Platte durch Festkörpergelenke mit einem zentralen Teil der Grundkörperplatte verbunden sind. Die abgegrenzten Teilbereiche der Platte des Grundkörpers fungieren als Antriebsteile, während der zentrale Plattenteil vorwiegend der Befestigung des Grundkörpers auf einer Unterlage dient.

An den Antriebsteilen ist eine erste Art von Gelenkteilen so angeordnet, dass eine innerhalb der Ebene des Grundkörpers verlaufende Bewegung von Antriebsteilen in eine zu dieser Ebene senkrechte Bewegungsrichtung transformiert wird. Eine zweite Art von mindestens einem Gelenkteil ist so ausgebildet, dass eine parallel zur Ebene des Grundkörpers verlaufende Bewegung von Antriebsteilen in eine dazu parallele Bewegung der Plattform umgesetzt wird. Dadurch sind Bewegungen der Plattform innerhalb einer Ebene und senkrecht zu dieser Ebene in einfacher und exakter Weise möglich.

Die Gelenkteile sind derart ausgeführt, dass ein erstes Paar von Gelenkteilen so orientiert ist, dass dessen Gelenkteile in Richtung eines Paares von Antriebsteilen in einem spitzen Winkel zur Ebene der Plattform und in Richtung eines dritten Antriebsteiles in einem rechten Winkel zur Ebene der Plattform liegt. Dadurch wird die Bewegung der Plattform senkrecht zur Ebene des Grundkörpers durch ein Paar von Antriebskörpern erzeugt, wobei die Last der Plattform über die Gelenkteile in die Antriebsteile, bzw. den Grundkörper geleitet werden kann und die gesamte Anordnung stabilisiert ist.

In Abhängigkeit von der erforderlichen Stabilität des Positioniertisches kann die Plattform über sieben oder acht Gelenkteile mit den Antriebsteilen des Grundkörpers verbunden sein. Eine Verbindung über sechs Gelenkteile stellt hierbei ein notwendiges Minimum hinsichtlich der zu übertragenden Bewegungen einerseits und der erforderlichen Stabilität der Anordnung andererseits dar.

Die Erfindung sei nachfolgend anhand von Ausführungsbeispielen sowie von Figuren näher erläutert. Hierbei zeigen:
- Fig. 1: eine Seitenansicht auf eine yz-Ebene eines erfindungsgemäßen Positioniertisches,
- Fig. 2: eine weitere Seitenansicht auf eine xz-Ebene des erfindungsgemäßen Positioniertisches,
- Fig. 3: eine perspektivische Darstellung des Positioniertisches,
- Fig. 4a: eine Darstellung einer Ausführungsform des Positioniertisches mit sechs Gelenkteilen,
- Fig. 4b: eine Darstellung einer Ausführungsform des Positioniertisches mit sieben Gelenkteilen,
- Fig. 5a: eine weitere Darstellung einer Ausführungsform des Positioniertisches mit sieben Gelenkteilen, und
- Fig. 5b: eine Darstellung einer Ausführungsform des Positioniertisches mit acht Gelenkteilen.

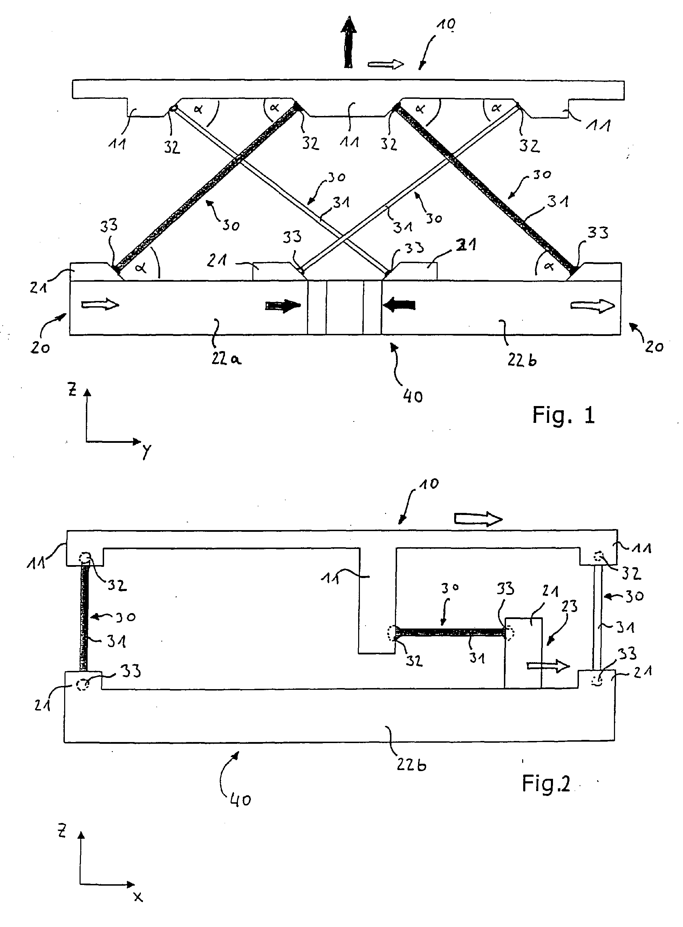

Der erfindungsgemäße Positioniertisch besteht nach Fig. 1 und 2 aus einer Plattform 10, die mit Antriebsteilen 20 über Gelenkteile 30 verbunden sind. Zur Aufnahme der Gelenkteile weist die Plattform Gelenkaufnahmen 11 auf. Diesen auf der Plattform 10 angeordneten Gelenkaufnahmen 11 entsprechen weitere Gelenkaufnahmen 21 an den Antriebsteilen 20 des Grundkörpers 40. In den Figuren 1 und 2 sind grundlegende Bewegungsrichtungen der Antriebsteile durch Pfeile markiert. Hinsichtlich dieser Bewegungsrichtungen werden die Antriebsteile 20 in yz-Antriebsteile 22a,b bzw. in ein x-Antriebsteil 23 für eine Bewegung der Plattform 10 in Richtung der y-, z- oder x-Achsen eines räumlichen Koordinatensystems unterschieden. Das Koordinatensystem ist in den Figuren 1 und 2 dargestellt. Der Grundkörper 40 kann als monolithischer Block ausgebildet sein und integrierte Piezo-Aktoren als Antriebsteile 20 umfassen.

Die Gelenkteile 30 bestehen jeweils aus einer Gelenkstange 31, sowie einem jeweils endseitig daran anschließenden Plattformgelenk 32 sowie einem Grundkörpergelenk 33, die in die jeweiligen Gelenkaufnahmen 11 und 21 eingepasst sind. Die Gelenke 32 und 33 erfüllen im wesentlichen zwei grundlegende Anforderungen. Sie müssen eine maximale Beweglichkeit sicherstellen und durch die Plattform auftretende Druckkräfte in die Gelenkaufnahmen 11 und 22 abführen können. Eine größtmögliche Beweglichkeit mit einer maximalen Anzahl von Freiheitsgraden ist durch Ausführungsformen als Kugel- oder Zapfengelenk, aber auch als Biegegelenk möglich.

Eine optimale Aufnahme von Lastkräften wird durch eine abgeschrägte Gestaltung der Gelenkaufnahmen 11 und 21, sowie eine schräge Orientierung der Gelenkteile 30 ermöglicht, die vor allem bei der Verbindung der yz-Antriebsteile 22a,b mit der Plattform 11 angewendet wird. Die Längsachsen der Gelenkteile liegen im Ausgangszustand des Positioniertisches innerhalb der yz-Ebene und sind gegenüber der Ebene der Plattform unter einem spitzen Winkel α stehend. Für eine stabile Lagerung der Plattform sind die innerhalb der yz-Ebene liegenden Gelenkteile 30 paarweise zueinander in der Weise geordnet, dass sich die Verlängerungen ihrer Längsachsen schneiden. Die dadurch erzeugte Dreiecksform stabilisiert die Positioniertischanordnung.

Eine zweite Art von Gelenkteilen 30 verbindet das x-Antriebsteil 23 mit der Plattform 11. Im Ausgangszustand liegen diese parallel zur Ebene des Grundkörpers bzw. der Plattform in Richtung der x-Achse des Koordinatensystems.

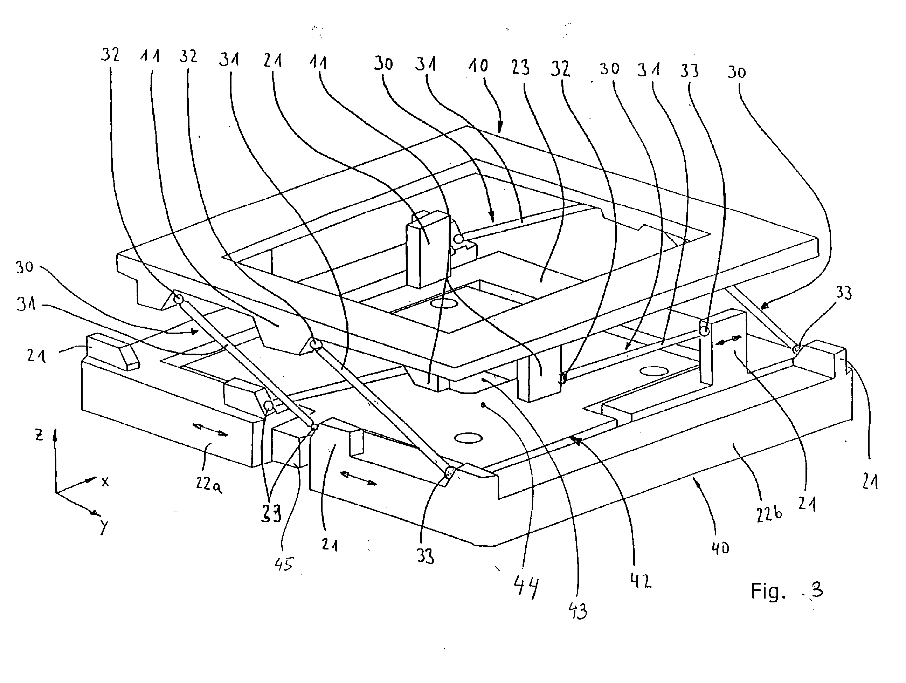

Fig. 3 zeigt eine perspektivische Darstellung des gesamten erfindungsgemäßen Positioniertisches, wobei die Darstellung des Grundkörpers aus Gründen der Übersichtlichkeit vereinfacht ist.

Der Grundkörper besteht in diesem Ausführungsbeispiel aus einer Platte mit im wesentlichen quadratischer Grundfläche, die mit Ausformungen 42 versehen ist, welche Festkörpergelenke bilden. Durch diese werden innerhalb der Grundplatte 40 zwei yz-Antriebsteile 22a,b sowie ein x-Antriebsteil 23 abgegrenzt. Die Festkörpergelenke sind so beschaffen, dass diese für die entsprechenden Antriebsteile keinerlei Spiel in eine zu ihrer Bewegungsrichtung senkrechte Richtung aufweisen. Von den Antriebsteilen 22a,b und 23 wird ein Zentralkörper 44 umschlossen, der im Mittelteil neben einer Aussparung 43 weitere, hier nicht bildlich dargestellte, Ausgestaltungen zur Befestigung des Grundkörpers beinhalten kann. Die Gelenkaufnahmen sind in dieser Figur nicht dargestellt. In Fig. 3 sind die Bewegungsrichtungen der Antriebsteile durch Pfeile verdeutlicht. Die Antriebsteile 22a,b sind nur in Richtung der y-Achse verschiebbar. Bei einer ersten Bewegungsform werden beide ohne Relativbewegung zueinander entlang der y-Achse verschoben, während bei einer zweiten Bewegungsform eine gegensinnige Bewegung der Antriebsteile 22a,b in Richtung der y-Achse erfolgt. Das Antriebsteil 23 führt nur Bewegungen in Richtung der x-Achse aus. Ein Widerlager 45 am Zentralkörper dient der Aufnahme von Stellelementen für die Bewegung der Antriebsteile 22a,b. Diese kompakte Ausführung des Grundkörpers erlaubt eine Größe des Positioniertisches von im wesentlichen 60 x 60 x 40 Millimetern.

Ein Heben der Plattform 10 ist durch die gegensinnige Bewegung der Antriebsteile 22a,b möglich. Dabei werden die Gelenkaufnahmen 21 der jeweiligen Antriebsteile zueinander bewegt, wobei die dazu gehörenden Grundkörpergelenke 33 zusammengeschoben werden. Dadurch werden die damit verbundenen Gelenkteile 30 aufgerichtet und die Plattform wird parallel zur z-Achse der Vorrichtung angehoben. Analog dazu wird die Plattform abgesenkt, indem sich die Antriebsteile 22a,b voneinander entfernen.

Eine Verschiebung der Plattform in Richtung der y-Achse wird ausgeführt, indem die Antriebsteile ohne Relativbewegung zueinander in Richtung der y-Achse verschoben werden. Entsprechend wird eine Verschiebung der Plattform in Richtung der x-Achse möglich, indem das Antriebsteil 23 bewegt wird und die Plattform an den entsprechenden Gelenkteilen mit sich zieht.

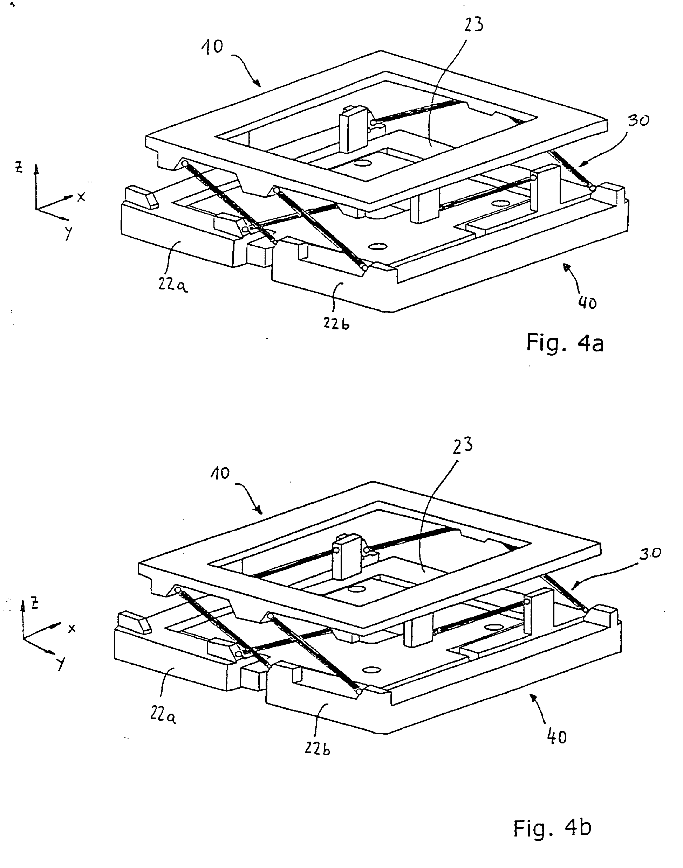

Die Anzahl der Gelenkteile innerhalb des erfindungsgemäßen Positioniertisches ist durch die auszuführenden Bewegungen und durch Stabilitätskriterien bestimmt. In den Figuren 4a bis 5b sind verschiedene Ausgestaltungen des Positioniertisches dargestellt. Minimal sind sechs Gelenkteile zur Verbindung zwischen dem Grundkörper und der Plattform notwendig. Diese Ausgestaltung ist in Fig. 4a dargestellt. Aus Gründen der Stabilität sind fünf Gelenkteile zwischen den Antriebsteilen 22a,b und der Plattform 10 in der in Fig. 4a dargestellten Form notwendig, während nur ein Gelenkteil zur Verbindung zwischen dem Antriebsteil 23 und der Plattform zwingend erforderlich ist.

Durch alle weiteren zusätzlich hinzu kommenden Gelenkteile ist das System des Positioniertisches überbestimmt. Es sind keine weiteren Freiheitsgrade für die Bewegung der Plattform möglich. Die weiteren Gelenkteile erhöhen jedoch die mechanische Stabilität des gesamten Systems. Die in Fig. 4b dargestellte Ausführungsform beinhaltet im Vergleich zu der in Fig. 4a dargestellten Variante ein zusätzliches Gelenkteil zwischen dem Antriebsteil 23 und der Plattform 10 und somit sieben Gelenkteile.

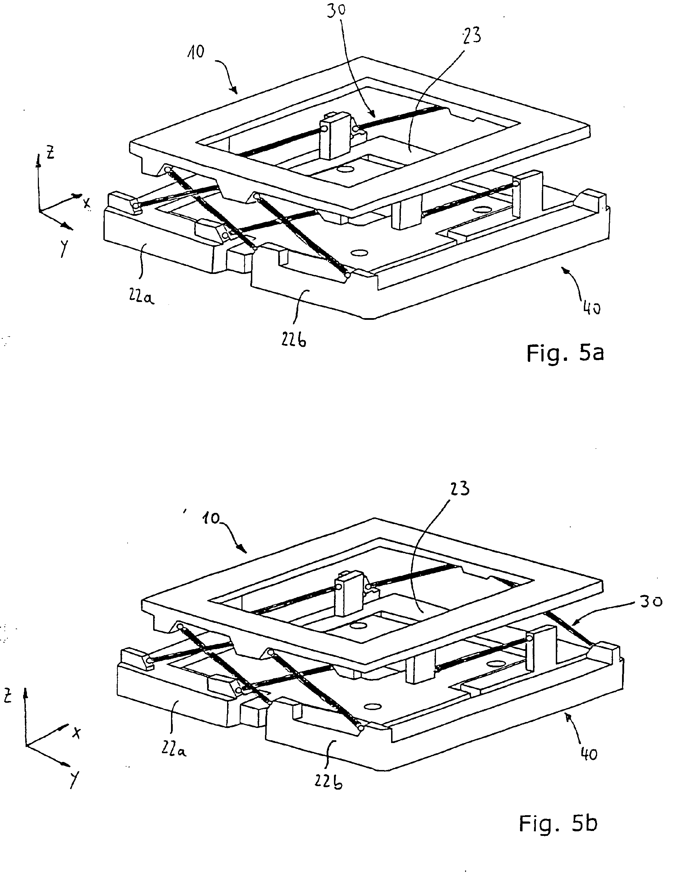

Die in Fig. 5a dargestellte Ausführungsform beinhaltet ebenfalls sieben Gelenkteile, allerdings in einer anderen Verteilung bezogen auf Fig. 4b. Eine Ausführungsform des erfindungsgemäßen Positioniertisches weist acht Gelenkteile auf, wie in Fig. 5b dargestellt.

## Patentansprüche

1. Positioniertisch für translatorische Bewegungen in drei zueinander orthogonalen Richtungen x, y und z, umfassend eine Plattform (10), linear bewegliche Antriebsteile (20) und diese mit der Plattform (10) verbindende stabförmige Gelenkseite (30),
**dadurch gekennzeichnet,**
- **dass** die Antriebsteile (20) Bestandteil eines einkertlich ausgeführten Grundkörpers (40) sind, wobei deren Bewegungrichtungen sämtlich in einer ersten und/oder zweisen, dazu parallelen Eben liegen,
- die Bewegungsrichtungen mittels der Gelenkteile (30) in translatorische Bewegungen der Plattform (10) überführt werden, der Grundkörper (40) als Platte ausgeführt ist,
wobei die Antriebsteile (20) Piezo-Aktoren oder Tauchspulen umfassen.

2. Positioniertisch nach Anspruch 1,
**dadurch gekennzeichnet, daß** die Platte ein massiver Körper ist und Ausformungen (42) aufweist, die als Festkörpergelenke zwischen den Antriebsteilen (20) innerhalb des Grundkörpers (40) dienen, und eine erste Art der Gelenkteile (30) so angeordnet ist, dass eine Bewegung mindestens zweier Antriebsteile innerhalb einer Ebene des Grundkörpers (40) in die zur Ebene des Grundkörpers senkrechte z-Richtung transformiert wird und mindestens ein Gelenkteil (30) eine Bewegung eines Antriebsteiles parallel zur Ebene des Grundkörpers auf die Plattform (10) überträgt.

3. Positioniertisch nach Anspruch 2,
**dadurch gekennzeichnet,**
**dass** mindestens ein erstes Paar von Gelenkteilen (30) so orientiert ist, dass dessen Gelenkteile (30) in Richtung eines Paares von Antriebsteilen jeweils unter einem spitzen Winkel (α) zu einer Ebene der Plattform (10) orientiert und in einer Richtung eines dritten Antriebsteiles unter einem rechten Winkel zur Ebene der Plattform (10) orientiert ist.

4. Positioniertisch nach einem der vorhergehenden Ansprüche,
**dadurch gekennzeichnet,**
**dass** die Plattform (10) über sechs Gelenkteile (30) mit den Antriebsteilen (20) des Grundkörpers (40) verbunden ist.

5. Positioniertisch nach einem der Ansprüche 1 bis 3,
**dadurch gekennzeichnet,**
**dass** die Plattform (10) über sieben Gelenkteile (30) mit den Antriebsteilen (20) des Grundkörpers (40) verbunden ist.

6. Positioniertisch nach einem der Ansprüche 1 bis 3,
**dadurch gekennzeichnet,**
**dass** die Plattform (10) über acht Gelenkteile (30) mit den Antriebsteilen (20) des Grundkörpers (40) verbunden ist.

## Claims

1. Positioning table for translatory movements in three directions, x, y and z, orthogonal to each other; comprising a platform (10), linearly moveable drive parts (20) and rod linkage parts (30) connecting the latter to the platform (10),
**characterised in that**
- the drive parts (20) are an integral part of a uniformly configured base body (40), wherein their directions of movement all lie in a first and/or second parallel plane,
- the directions of movement are transferred by means of the linkage parts (30) into translatory movements of the platform (10),
- the base body (40) is configured as a plate, wherein the drive parts (20) comprise piezo actuators or moving coils.

2. Positioning table according to Claim 1,
**characterised in that**
the plate is a solid body and has mouldings (42), which serve as solid-body linkage parts between the drive parts (20) within the base body (40), and a first type of linkage part (30) is so arranged that a movement of at least two drive parts within a plane of the base body (40) is transformed into the z-direction perpendicular to the plane of the base body and at least one linkage part (30) transfers a movement of a drive part parallel to the plane of the base body to the platform (10).

3. Positioning table according to Claim 2,
**characterised in that**
at least a first pair of linkage parts (30) is so oriented that its linkage parts (30) are in each case oriented in the direction of a pair of drive parts at an acute angle (α) to a plane of the platform (10) and in a direction of a third drive part at a right angle to the plane of the platform (10).

4. Positioning table according to one of the preceding claims,
**characterised in that**
the platform (10) is connected by means of six linkage parts (30) to the drive parts (20) of the base body (40).

5. Positioning table according to one of the Claims 1 to 3,
**characterised in that**
the platform (10) is connected by means of seven linkage parts (30) to the drive parts (20) of the base body (40).

6. Positioning table according to one of the Claims 1 to 4,
**characterised in that**
the platform (10) is connected by means of eight linkage parts (30) to the drive parts (20) of the base body (40).

## Revendications

1. Table de positionnement pour des mouvements de translation dans trois directions orthogonales les unes par rapport aux autres x, y et z, comprenant une plateforme (10), des éléments d'entraînement mobiles linéairement (20) et des éléments d'articulation en forme de barre (30) reliant ceux-ci à la plateforme (10),
**caractérisée en ce que**
- les éléments d'entraînement (20) font partie d'un corps de base (40) réalisé de manière homogène, leurs directions de mouvement se trouvant toutes dans un premier et/ou un second plan parallèle à celui-ci,
- les directions de mouvement sont converties en mouvements de translation de la plateforme (10) à l'aide des éléments d'articulation (30),
- le corps de base (40) est réalisé sous forme de plaque, les éléments d'entraînement (20) comportant des actionneurs piézoélectriques ou des bobines mobiles.

2. Table de positionnement selon la revendication 1,
**caractérisée en ce que** la plaque est un corps plein et comporte des déformations (42) qui servent d'articulations de corps plein entre les éléments d'entraînement (20) à l'intérieur du corps de base (40) et un premier type d'éléments d'articulation (30) est disposé de telle manière qu'un mouvement d'au moins deux éléments d'entraînement à l'intérieur d'un plan du corps de base (40) est transformé dans la direction perpendiculaire z au plan du corps de base et au moins un élément d'articulation (30) transmet un mouvement d'un élément d'entraînement à la plateforme (10) parallèlement au plan du corps de base.

3. Table de positionnement selon la revendication 2,
**caractérisée en ce qu'**au moins une première paire d'éléments d'articulation (30) est orientée de telle manière que ses éléments d'articulation (30) sont orientés dans la direction d'une paire d'éléments d'entraînement sous un angle aigu (α) par rapport à un plan de la plateforme (10) et dans la direction d'un troisième élément d'entraînement sous un angle droit par rapport au plan de la plateforme (10).

4. Table de positionnement selon l'une quelconque des revendications précédentes,
**caractérisée en ce que** la plateforme (10) est reliée aux éléments d'entraînement (20) du corps de base (40) par l'intermédiaire de six éléments d'articulation (30).

5. Table de positionnement selon l'une quelconque des revendications 1 à 3,
**caractérisée en ce que** la plateforme (10) est reliée aux éléments d'entraînement (20) du corps de base (40) par l'intermédiaire de sept éléments d'articulation (30).

6. Table de positionnement selon l'une quelconque des revendications 1 à 3,
**caractérisée en ce que** la plateforme (10) est reliée aux éléments d'entraînement (20) du corps de base (40) par l'intermédiaire de huit éléments d'articulation (30).
